# EUROPEAN PATENT SPECIFICATION

(11) **EP 2 600 495 B1**
(45) Date of publication and mention of the grant of the patent: **19.07.2017**
(21) Application number: 11191729.0
(22) Date of filing: 02.12.2011
(51) Int. Cl.: H02K 1/16, H02K 1/20, H02K 1/14

(54) **COOLING CONDUITS PROVIDED IN A STACK OF STATOR SEGMENTS**
KÜHLLEITUNGEN MIT EINEM STAPEL AUS STATORSEGMENTEN
CONDUITES DE REFROIDISSEMENT DANS UNE PILE DE SEGMENTS DE STATOR

(43) Date of publication of application: 05.06.2013
(73) Proprietor: Siemens Aktiengesellschaft, 80333 München (DE)
(72) Inventor: Soerensen, Peter Hessellund, 8740 Brædstrup (DK); Le Besnerais, Jean, 59370 Mons en Baroeul (FR)

(56) References cited:
- EP-A2- 2 034 588
- DE-A1- 2 219 964
- DE-A1-102005 021 907
- DE-C- 590 588
- US-A1- 2011 285 221

## Description

### Field of invention

The present invention relates to an arrangement for an electrical machine, namely to a stator segment, wherein a cooling conduct system is provided within the arrangement, wherein the arrangement is formed by stacking a plurality of plates.

A stator for an electrical machine, such as a generator or a motor, may comprise an annular structure for holding plural coils using protrusions or teeth of the stator extending radially inwards or outwards. The stator may be made of material with high magnetic permeability to focus magnetic field lines within the material of the stator, when a current flows through the coils supported by the stator support structure. Radially inwards or radially outwards a rotor may be arranged comprising a plurality of permanent or electro magnets such that an air gap is formed between ends of the teeth of the stator construction and end of the magnets of the rotor.

During operation, the induction of an electric current in stator coils may produce excessive heat in the stator construction. Therefore, the stator construction, in particular for large power generators, may require cooling. It is conventionally known to cool a stator structure by air cooling and by liquid cooling.

Document DE 10 2009 009 819 A1 discloses a packet of stator metal pieces for an electrical machine having plural cooling channels and cooling openings, wherein the cooling openings are radially and/or tangentially offset relative to each other in adjacent stator metal pieces.

Document US 2011/0285221 A1 discloses a stator winding assembly including a plurality of stacked laminates, wherein a cooling passage partially defined by orifices formed in the plurality of stacked laminates is provided.

Document EP 2 034 588 A2 discloses an apparatus and method for cooling rotor and stator motor cores, wherein a laminated core includes a plurality of laminations each of which are disposed in a non-spaced relation to an adjacent lamination and wherein the plurality of laminations are each dimensioned and configured to provide for a flow of cooling fluid travelling in a radial direction to the rotational axis of the motor.

Document DE 590 588 discloses a stator construction for radial cooling of the stator teeth, wherein a slot like recess is provided within a teeth, wherein the stator is stacked from a number of metal sheets.

However, it has been observed that the conventional arrangements for an electric machine exhibit unsatisfactory properties regarding cooling the arrangement for the electric machine.

There may be a need for an arrangement for an electric machine, in particular for a stator segment, wherein efficient cooling may be achieved and wherein furthermore manufacturing costs are reduced.

### Summary of the Invention

This need may be met by the invention as defined in the independent claim 1. Advantageous embodiments of the present invention are described by the dependent claims.

The stator segment may span a particular circumferential range, such as spanning an angle range between 5° and 360°, in particular between 20° and 70°, in particular 30° or 60°. The electric machine may for example be or comprise an electric generator.

The plates of the stack may be glued together or laminated together, wherein the plate may be stacked at their main planar surfaces such that boundary curves of the main planar surfaces align with each other (or are flush with each other). In particular, the plates may be stacked and laminated on top of each other (in particular electrically isolated from each other) in the axial direction perpendicular to the main planar surfaces of the plates. The plates may comprise iron or steel to provide an appropriate magnetic permeability for focusing magnetic field lines within the stack. The stack may be or may have been subjected to a pressure treatment (in particular exerting pressure perpendicular to main planar surfaces) and may be subjected or may have been subjected to a heat treatment within an oven to cure or crosslink glue or an adhesive placed between the plates at their respective main planar surfaces.

The plates having been assembled into the stack may be electrically isolated from each other. Each of the plates may have a much larger extension or extent or dimension or size in the circumferential direction and also in the radial direction than in a thickness direction, wherein the thickness direction is perpendicular to the main planar surfaces.

The first through opening may comprise a round or circular shape and may be provided to establish a portion of a cooling conduit, wherein this portion of the cooling conduit provided by the first through openings may allow the cooling fluid to flow along an axial direction being perpendicular to the main planar surfaces of the plates.

The first plate has a first through opening and another first through opening, wherein the first through opening and the other first through opening are provided at opposite circumferential ends of the first plate.

The second plate may have a same outer boundary as the first plate, such that when stacked on top of each other the outer boundary (line or curve) of the first plate matches or aligns with the outer boundary of the second plate. The second through opening may have a larger extent than the first through opening, in particular being at least 50 times to 200 times as large as the first through opening.

Upon stacking and/or laminating and/or gluing the at least three plates on top of each other the cooling conduit is formed inside the stack such that cooling fluid introduced into the cooling conduit is confined within the cooling conduit such that it is prohibited to run out of or leave the cooling conduit except at an entry port or an exit port (which is provided by the first through opening and the another first through opening contained within the first plate).

The partial overlap of the first through opening and the second through opening allows a propagation of the cooling fluid (in particular cooling air or cooling liquid) at least partially in the axial direction, in order to reach from a plate to another plate stacked on top of this plate. Thereby, the cooling channel is shaped by the shape of the first through opening and/or the second through opening such that the cooling fluid is conductable within the cooling conduit at least in the circumferential direction.

Thereby, an effective cooling of the arrangement for the electric machine may be achieved. Further, the arrangement for the electric machine may be easily manufactuable. The stack may for example comprise 200 to 10,000 plates, in particular between 1,000 and 5,000 plates. In particular, the thickness of the plates may amount to between 0.1 mm and 4 mm, in particular to between 0.5 mm and 2 mm, further in particular about 0.65 mm. The thickness of the stack in the axial direction may amount to between 0.2 m and 4 m, in particular to between 0.5 m and 3 m, in particular to about 2 m.

From the stator segment formed by the laminated stack, a stator may be assembled having a radius between 0.5 m and 12 m, in particular between 3 m and 5 m, further in particular being around 4 m. In particular, the stator may be a generator stator having radially outwards protruding teeth and being adapted to operate together with an outer rotor.

Each plate comprises plural protrusions protruding radially (in particular outwards) for providing, when the stack is formed, plural teeth and slots alternating in the circumferential direction, wherein in particular a radial extent of the protrusions amounts to between 1/50 to 1/3, in particular between 1/20 and 1/5, of an extent of the plate in the circumferential direction.

The plural protrusions may have a rectangular shape, at least approximately. Each plate may further comprise a circumferentially extending base from which the plural protrusions extend radially (in particular outwards). Thereby, plural coils may be supported by the laminated stack in order to provide a complete stator segment for an electric generator.

The first plate has the first through opening, provided to form an entry port for the cooling liquid, arranged at a first circumferential end of the first plate.

Thereby, cooling fluid, in particular cooling air and/or cooling liquid, may be introduced in the or into the cooling conduit from one circumferential end of the first plate via the first through opening of the first plate. In particular, an entry connector for connecting the entry port to a cooling tubing may be provided at the entry port of the first plate.

Thereby, convenient supply of the cooling fluid may be achieved.

According to an embodiment of the present invention the first shape is round, in particular circular. Thereby, manufacturing the first through opening may be simplified. Further, smooth flow of the cooling liquid or cooling fluid within the first through holes may be enabled, since by stacking plural first plates on top of each other essentially a tubular cooling conduit may be formed within the first plates. Thereby, the tubular cooling conduit may have a circular cross-section corresponding to the first shape. Alternatively, the first shape may be oval or rectangular or quadratic.

According to an embodiment of the present invention an extent in the circumferential direction of each of the plates amounts to between 1,000 times and 10,000 times of a thickness of the plate perpendicular to the main surface. Thereby, vary thin plates may be employed to manufacture the arrangement for the electric machine, wherein manufacturing costs may be reduced. In particular, the thin plates may allow punching or stamping the first through opening and/or the second through opening through the different plates.

The second through opening extends in the circumferential direction between 50% and 99% of a circumferential extent of the second plate. Thus, a main portion of the circumferential extent of the second plate may be recessed (within a particular radial range), to provide at least a portion of the second through opening. Thereby, in particular flow of the cooling fluid along the circumferential direction may be enabled for more effective cooling of the arrangement for the electric machine.

According to an embodiment of the present invention a portion of the second shape at a circumferential end of the second plate corresponds to at least a portion of the first shape. Thereby, an overlap of the through opening in the adjacent first plate and second plate may be enabled, in order to allow cooling fluid flow from the first through opening in the first plate to the second through opening in the second plate adjacent to the first plate.

In particular, plural first plates may be stacked on top of each other, then plural second plates may be stacked on top of the plural first plate and then first plural first plates may be stacked on the plural second plate in order to form the stack.

According to an embodiment of the present invention the second plate has another second through opening of the first shape arranged at another circumferential end of the second plate. Thereby, when stacked on a first plate an overlap of the first through opening and the other second through opening is achievable, for allowing liquid flow along the axial direction. The second through opening comprises plural radially extending opening portions at respective plural circumferential positions, corresponding to the plural protrusions. An extent of the radially extending opening portions in the radial direction amounts to between 10 times and 100 times of an extent of the radially extending portions in the circumferential direction.

The plural radially extending opening portions may allow cooling of teeth of the arrangement, when configured as a stator or a stator segment. Thereby, in particular, the plural radially extending opening portions may allow flow of the cooling fluid along the radial direction and/or the axial direction, when plural second plates are stacked on top of each other. Thereby, the cooling effect of the cooling liquid flowing radially outwards and axially may be improved.

The plurality of plates comprises a third plate having a plurality of third through openings of a third shape different from the second shape, the third through openings being arranged at plural circumferential positions, corresponding to the positions of the plural protrusions, the third through openings being in particular arranged at a same radial position, in particular corresponding to radial end portions of the plural protrusions.

The third through openings within the third plate may allow a flow of the cooling liquid along the axial direction in order to allow a continuous cooling fluid flow within the cooling conduit. Thereby, effective exchange of the cooling fluid may be achieved in order to improve the heat transfer rate from the arrangement which is to be cooled.

According to an embodiment of the present invention the arrangement is adapted such that the cooling fluid flows along an axial direction within the first through opening and/or the other first through opening, and/or along the circumferential direction within a circumferential portion of the first through opening, and along the radial direction and
the axial direction within the radially extending portions of the second through opening, and along the axial direction within the third through opening.

In particular, the cooling fluid flows exclusively along the axial direction within the first through opening and/or the other first through opening. In particular, the cooling fluid flows exclusively in the axial direction within the third through opening. Thereby, a smooth flow of the cooling fluid may be provided from the entry port to the exit port.

In particular, an arrangement comprised by stacking plural first plate, plural second plate, at least one third plate, a mirrored plurality of second plates and a plurality of first plates may be repeated to form an even thicker stack, wherein the cooling liquid or fluid alternately flows along the circumferential direction than flows opposite to the circumferential direction, than flows again in the circumferential direction and so force.

Thereby, it may also be enabled that the entry port and the exit port are provided at a same circumferential end of the first plates.

Embodiments of the present invention are now described with reference to the accompanying drawings. The invention is not restricted to the illustrated or described embodiments.

### Brief description of the drawings

The illustration in the drawings is in schematic form. It is noted that in different figures, similar or identical elements may be provided with the same reference signs or with reference signs, which are different from the corresponding reference signs only within the first digit.
Figs. 1 to 4 illustrate a first plate, a second plate and a third plate of an arrangement according to an embodiment of the present invention;
Fig. 5 illustrates a way of stacking the three plates illustrated in Figures 1 to 4 according to an embodiment of the present invention, to form an arrangement according to an embodiment of the present invention;
Figs. 6, 7 and 8 illustrate a first, a second and another second plate for forming an arrangement according to an example not being part of the claimed invention;
Fig. 9 illustrates a view of some second plates as illustrated in Fig. 7, and some other second plates as illustrated in Fig. 8, when stacked on top of each other; and
Fig. 10 illustrates a stack according to an embodiment of the present invention, wherein the stack is formed by stacking a plurality of different plates.

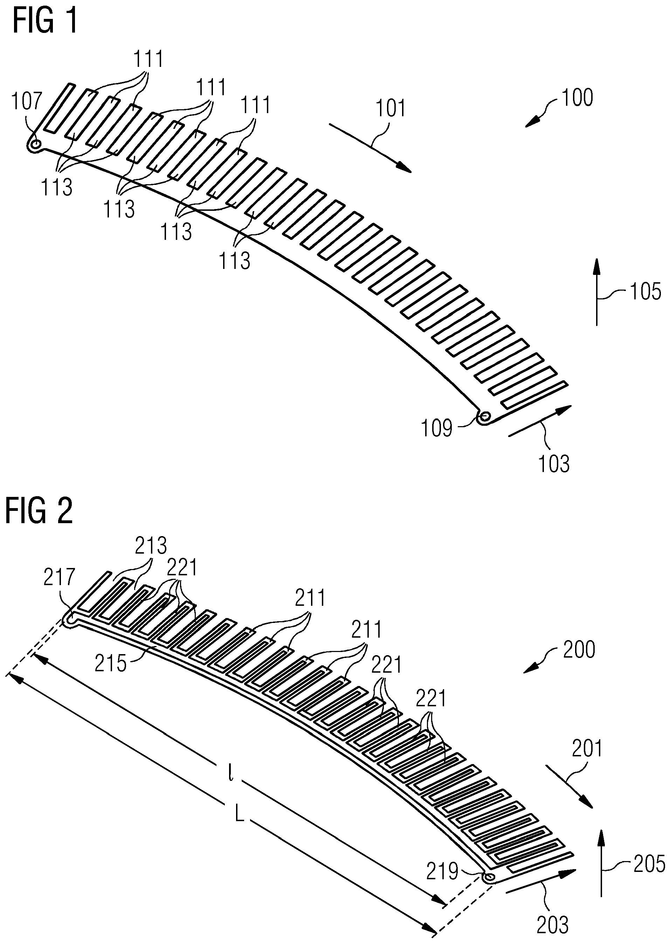

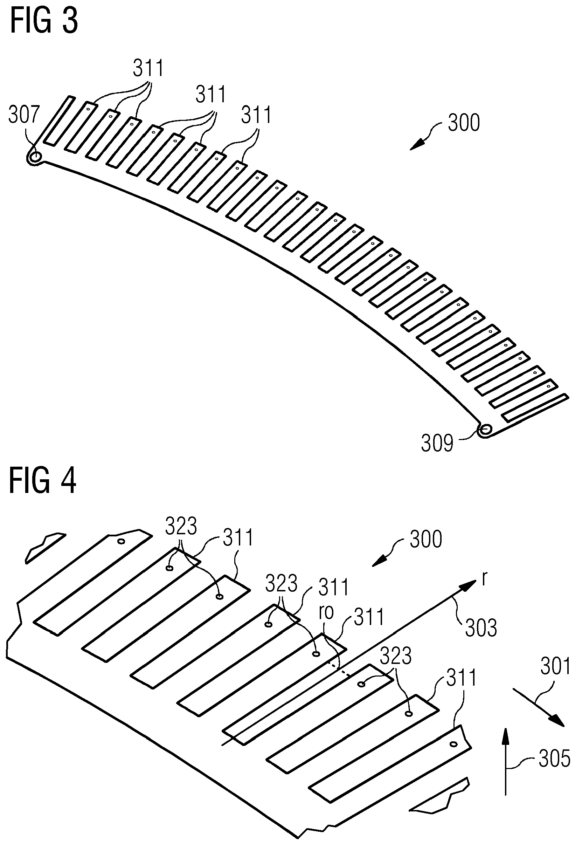

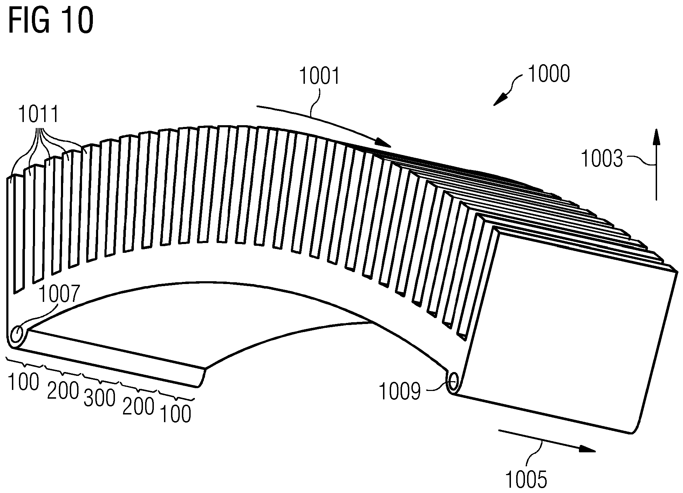

Fig. 1 illustrates a first plate 100, Fig. 2 illustrates a second plate 200 and Figs. 3 and 4 illustrate a third plate 300, wherein the first plate 100, the second plate 200 and the third plate 300 may be used to form an arrangement according to an embodiment of the present invention, in particular a stator segment for a generator, such as the stack 1000 illustrated in Fig. 10.

The first plate 100 illustrated in Fig. 1 forming a 60° sector of a circle extends in the circumferential direction 101 and also extends in the radial direction 103. A thickness of the plate 100 being measured perpendicular to the circumferential direction 101 and also perpendicular to the radial direction 103 may amount to about 0.65 mm, for example.

The first plate 100 represents a 60° annular segment which together with the second plate 200 (Fig. 2) and the third plate 300 (Figs. 3 and 4) may form a stack 1000 (Fig. 10) upon laminating a plurality of these plates, in order to form a stator segment spanning an angle interval of 60°. The axial direction is indicated by the arrow 105 in Figs. 1 to 4.

The first plate 100 comprises a first through opening 107 and another first through opening 109, wherein the first through opening 107 is arranged at a first circumferential end of the first plate 100 and the other first through opening 109 is arranged at the other circumferential end of the first plate 100. The first plate further comprises plural protrusions 111, which upon stacking plural plates on top of each other form plural teeth of the stator segment. Between the teeth 111 slots 113 will be formed upon stacking plural plates on top of each other. By the first through opening 107 and the second through opening 109 an entry port and/or an exit port may be formed, wherein upon stacking plural first plates on top of each other cooling fluid or liquid may propagate along the axial direction 105.

The second plate 200 illustrated in Fig. 2 has a same outer boundary line as the first plate 100 illustrated in Fig. 1. However, the second plate has a second through opening 215 which has a different shape than the first through opening of plate 100 illustrated in Fig. 1. The second through opening 215 extends in the circumferential direction to an amount l which is about between 90% and 99% of an extent L of the second plate 200 in the circumferential direction 201.

Further, a portion 217 of the second through opening 215 corresponds to a portion of the first shape of the first through hole or through opening 107 of the first plate 100. Thereby, liquid may propagate from the through opening 107 via the portion 217 into the second through opening 215 extending circumferentially. Within the second through opening 215 the cooling liquid or fluid may run along the circumferential direction 201. Further, the second plate 200 illustrated in Fig. 2 comprises another second through opening 219 having the same shape as the shape of the first through opening 107 of the first plate 100, wherein the other second through opening is arranged at another circumferential end as the portion 217.

Further, the second through opening 215 comprises plural radially extending opening portions 221 and plural circumferential positions corresponding to the positions of the protrusions 111 or 211.

The third plate 300 illustrated in Fig. 3 and in Fig. 4 has a same outer boundary line as the first plate 100 and the second plate 200 illustrated in Figs. 1 and 2. Further, the third plate has two first through openings 307 and 309 at same positions as the first plate 100 has the first through openings 107 and 109. Further, as can be seen in the detailed view of Fig. 4 illustrating a portion of the third plate 300, the third plate 300 comprises a plurality of third through openings 323, which are arranged at plural circumferential positions corresponding to the positions of the plural protrusions 311. Thereby, the plural third through openings 323 are arranged at a same radial position r0. The plural third through openings 323 are provided to allow cooling liquid flow along the axial direction 305.

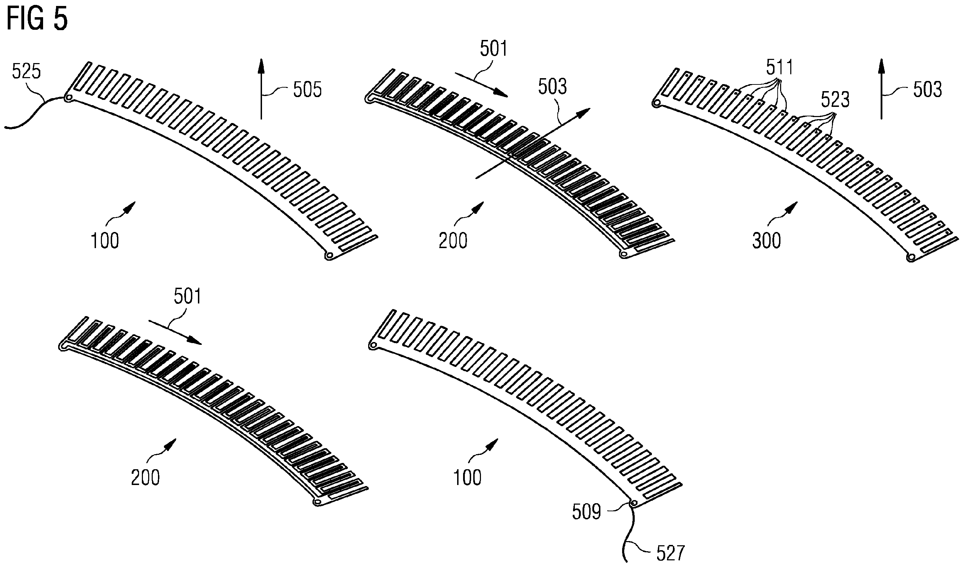

Fig. 5 illustrates a method for assembling a stack of blades for providing a stator statement, in particular for a generator, according to an embodiment of the present invention. In a first step one or more first plates 100, in particular five first plates 100, are stacked on top of each other. In a second step one or more, in particular three second plates 200 are stacked on top of the plural first plates. In a third step one or more third plates 300, in particular one plate 300, is stacked on the plural second plates. In a fourth step one or more mirrored second plates, in particular three mirrored second plates, are stacked on top of the third plates. In a fifth step one or more, in particular fifteen, first plates 100 are stacked on top of the plural second plates. Thereby, the mirrored second plate corresponds in shape to the second plate 200 but is in a different orientation obtained by rotating the second plate around the radial axis as indicated by reference 503 by an angle of 180°.

Thereby, a stack (such as stack 1000 illustrated in Fig. 10) may be formed which is bounded at the bottom and at the top by one or more first plates 100. At one of the first through openings 107 und 109 an entry port 1007 for the cooling liquid may be provided and at the other of the first through opening an exit port 1009 of the cooling fluid may be provided, wherein the respective other first through opening may be blocked by a plug, for example. Exemplarily, an entry tubing 525 and an exit tubing 527 are shown in Fig. 5 connecting to different first through openings of the first plates 100.

The plural stacked first plates 100 will then allow fluid flow along the axial direction 505. The plural stacked second plates 200 will allow cooling fluid flow along the circumferential direction 501 and also along the radial direction 503 and partly also along the axial direction 505. The plural stacked third plates 300 will allow flow of the cooling fluid along the axial direction 503 within the end portions of the protrusions 511. Also the mirrored second plates 200 will allow fluid flow along the circumferential direction 501, the axial direction 503 and at least partially also along the axial direction 505. Finally, the plural first plates 100 will allow fluid flow along the axial direction 505 towards the exit port 509 which leads to the outlet tubing 527.

Fig. 10 schematically illustrates an arrangement 1000 according to an embodiment of the present invention, which has been obtained by laminating a plurality of plates comprising the first plate 100, the second plate 200 and the third plate 300. At the entry port 1007 (the first through opening of the first plate 100) the cooling fluid enters and at the exit port 1009 (the other through opening of the first plate 100) the cooling fluid exits the arrangement 1000.

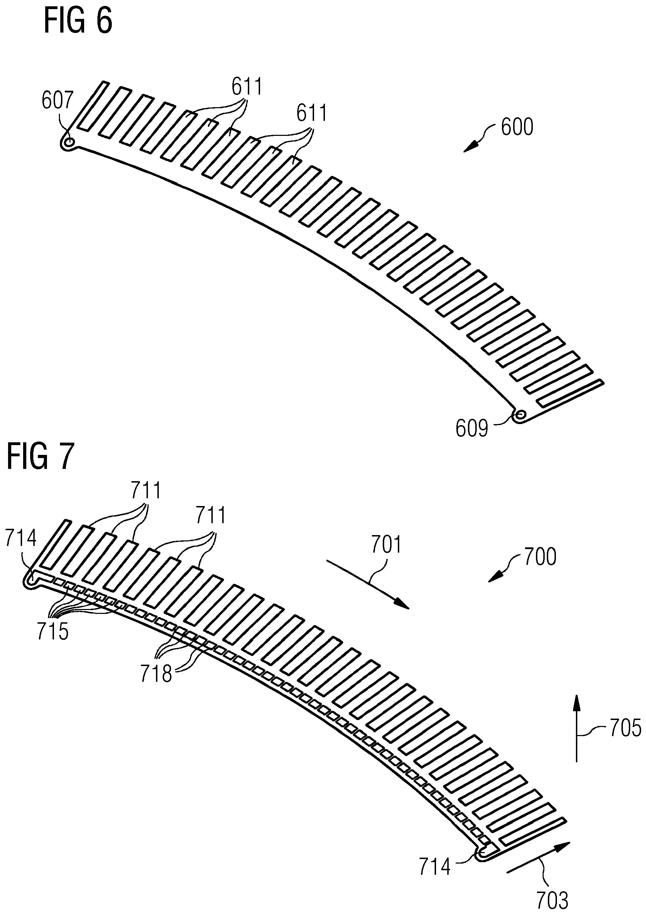

Figs. 6, 7 and 8 illustrate a first plate, a second plate and another second plate, respectively, which may be utilized for assembling a stack to manufacture an arrangement according to an example not being part of the claimed invention. The first plate 600 illustrated in Fig. 6 corresponds to or is equal to the first plate 100 illustrated in Fig. 1.

The second plate 700 illustrated in Fig. 7 has a same outer boundary line as the first plate 600 illustrated in Fig. 6 and further comprises plural second through openings 715 which are arranged along the circumferential direction 701. The plural second through openings 715 have partly a rectangular size and are equally distributed across the circumferential width of the second plate 700. Further second through openings 714 are arranged which at least partially have a same size as the first through openings 607, 609 of the first plate 600.

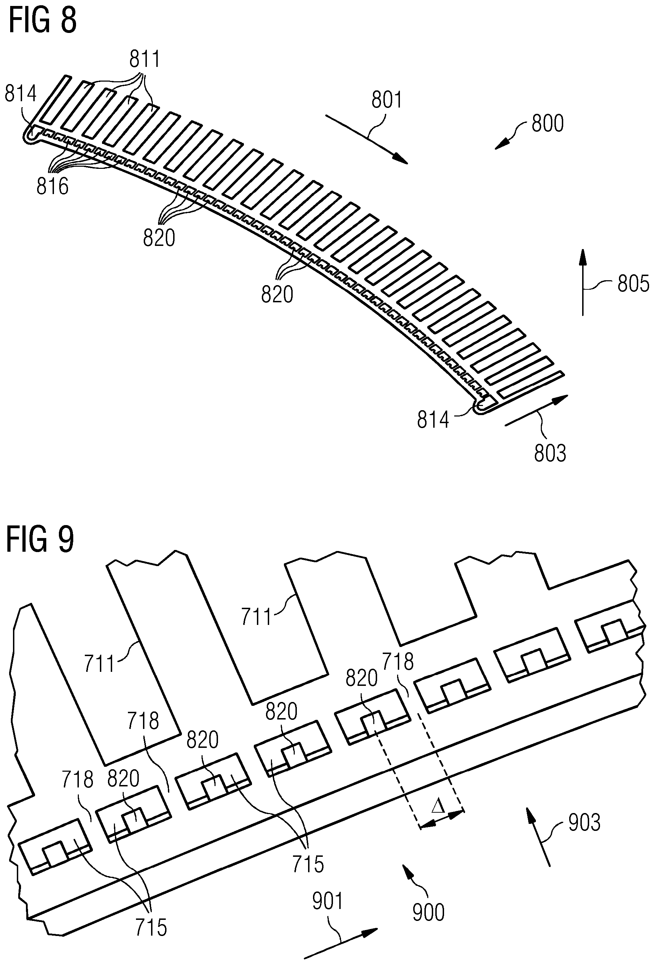

Fig. 8 illustrates another second plate 800 having a plurality of other second through openings 816 which have the same size as the plural second through openings 715 of the second plate 700 illustrated in Fig. 7 but which are circumferentially offset relative to the second through opening 715 of the second plate 700. Thus, when the second plate 700 is stacked on top of the other second plate 800 the second through openings 715 do not align with the other second openings 816. Instead, a connection 718 between two adjacent second through openings 715 (in the second plate 700 illustrated in Fig. 7) will lie above one of the other second through openings 816 without covering the one of the other through openings 816 (of the other second plate 800 illustrated in Fig. 8). Between the other second through openings 816 connections 820 are provided.

Upon stacking a plurality of the second plate 700 and the other second plate 800 (alternately) an assembly 900 as is illustrated in Fig. 9 is created. As can be seen from Fig. 9 the connections 820 of the other second plates 800 are circumferentially (along the direction 901) offset by an amount Δ relative to the connections 718 of the second plates 700 illustrated in Fig. 7. Thereby, the cooling liquid may propagate in a zigzag movement partially propagating along the circumferential direction 901 and partly performing a reciprocating movement along the axial direction 905. When stacking the plates as illustrated in Figs. 6-8 the arrangement illustrated in Fig. 10 may also be generated.

## Claims

1. Stator segment (1000), for an electric machine, the stator segment comprising:
a stack (1000) of at least three of a plurality of plates having main planar surfaces, the surfaces extending in a circumferential direction (101) to a larger extent than in a radial direction (103), wherein the plurality of plates comprises at least
a first plate (100) having a first through opening (107, 109) of a first shape, and
a second plate (200) having a second through opening (215) of a second shape different from the first shape,
wherein the at least three plates are bounded at their main surfaces to form the stack such that a cooling conduit is formed inside the stack by at least partial overlap of the first through opening and the second through opening, wherein cooling fluid is guidable within the cooling conduit at least in the circumferential direction,
wherein each plate comprises plural protrusions (111) protruding radially for providing, when the stack is formed, plural teeth and slots (113) alternating in the circumferential direction,
wherein the first plate has the first through opening (107), provided to form an entry port (1007) for the cooling liquid, arranged at a first circumferential end of the first plate,
wherein the first plate has another first through opening (109), provided to form an exit port (1009) for the cooling liquid, of the first shape arranged at another circumferential end of the first plate,
wherein the second through opening (215) extends (l) in the circumferential direction between 50 % and 99 % of a circumferential extent (L) of the second plate, wherein the extend of the second through opening (215) in the circumferential direction is a main portion of a circumferential extent (L) of the second plate, wherein the second through opening (215) comprises plural radially extending opening portions (221) at respective plural circumferential positions corresponding to the plural protrusions (211), wherein an extent of the radially extending opening portions in the radial direction amounts to between 10 times and 100 times of an extent of the radially extending portions in the circumferential direction,
wherein the plural radially extending opening portions may allow cooling of teeth of the stator segment,
wherein the plurality of plates comprises a third plate (300) having a plurality of third through openings (323) of a third shape different from the second shape,
the third through openings being arranged at plural circumferential positions, corresponding to the positions of the plural protrusions (311),
the third through openings being in particular arranged at a same radial position (r0), in particular corresponding to radial end portions of the plural protrusions.

2. Stator segment according to claim 1, wherein a radial extent of the protrusions amounts to between 1/50 to 1/3, in particular between 1/20 and 1/5, of an extent of the plate in the circumferential direction.

3. Stator segment according to one of the preceding claims, wherein the first shape is round, in particular circular.

4. Stator segment according to one of the preceding claims, wherein an extent (L) in the circumferential direction of each of the plates amounts to between 1,000 times and 10,000 times of a thickness of the plate perpendicular to the main surface.

5. Stator segment according to one of the preceding claims, wherein a portion (217) of the second shape of the second through opening (215) at a circumferential end of the second plate corresponds to at least a portion of the first shape.

6. Stator segment according to one of the preceding claims, wherein the second plate has another second through opening (219) of the first shape arranged at another circumferential end of the second plate.

7. Stator segment according to one of the preceding claims, adapted such that the cooling fluid flows
along an axial direction (105) within the first through opening and the other first through opening, and/or
along the circumferential direction (101) within a circumferential portion of the first through opening, and
along the radial direction (103) and the axial direction within the radially extending portions of the second through opening, and
along the axial direction within the third through opening.

## Patentansprüche

1. Statorsegment (1000), für eine elektrische Maschine, wobei das Statorsegment aufweist:
einen Stapel (1000) aus zumindest drei einer Vielzahl von Platten mit planaren Hauptflächen, wobei sich die Flächen in einer Umfangsrichtung (101) in einem größeren Ausmaß als in einer radialen Richtung (103) erstrecken, wobei die Vielzahl von Platten zumindest aufweist
eine erste Platte (100) mit einer ersten Durchgangsöffnung (107, 109) einer ersten Form, und
eine zweite Platte (200) mit einer zweiten Durchgangsöffnung (215) einer zweiten Form, die sich von der ersten Form unterscheidet,
wobei die zumindest drei Platten an ihren Hauptflächen begrenzt sind, um den Stapel derart zu bilden, dass eine Kühlleitung innerhalb des Stapels gebildet wird durch zumindest teilweise Überlappung der ersten Durchgangsöffnung und der zweiten Durchgangsöffnung, wobei ein Kühlfluid innerhalb der Kühlleitung zumindest in der Umfangsrichtung geführt werden kann,
wobei jede Platte mehrere Vorsprünge (111) aufweist, die radial vorstehen, so dass sich, wenn der Stapel gebildet wird, mehrere Zähne und Schlitze (113) in der Umfangsrichtung abwechseln,
wobei die erste Platte die erste Durchgangsöffnung (107) aufweist, die dazu vorgesehen ist, eine Eintrittsöffnung (1007) für das Kühlfluid zu bilden, angeordnet an einem ersten Umfangsende der ersten Platte,
wobei die erste Platte noch eine weitere erste Durchgangsöffnung (109) der ersten Form aufweist, die dazu vorgesehen ist, eine Austrittsöffnung (1009) für das Kühlfluid zu bilden, angeordnet an einem anderen Umfangsende der ersten Platte,
wobei sich die zweite Durchgangsöffnung (215) in der Umfangsrichtung zwischen 50% und 99% einer Umfangsausdehnung (L) der zweiten Platte erstreckt (1),
wobei die Ausdehnung der zweiten Durchgangsöffnung (215) in der Umfangsrichtung ein Hauptabschnitt einer Umfangsausdehnung (L) der zweiten Platte ist,
wobei die zweite Durchgangsöffnung (215) mehrere sich radial erstreckende Öffnungsabschnitte (221) an entsprechenden mehreren Umfangspositionen aufweist, die den mehreren Vorsprüngen (211) entsprechen,
wobei eine Ausdehnung der sich radial erstreckenden Öffnungsabschnitte in radialer Richtung zwischen einem 10-fachen und 100-fachen einer Ausdehnung der sich radial erstreckenden Abschnitte in Umfangsrichtung beträgt,
wobei die mehreren sich radial erstreckenden Öffnungsabschnitte eine Kühlung der Zähne des Statorsegments ermöglichen,
wobei die Vielzahl von Platten eine dritte Platte (300) mit einer Vielzahl von dritten Durchgangsöffnungen (323) einer dritten Form aufweist, die sich von der zweiten Form unterscheidet,
wobei die dritten Durchgangsöffnungen an mehreren Umfangspositionen angeordnet sind, die den Positionen der mehreren Vorsprünge (311) entsprechen,
wobei die dritten Durchgangsöffnungen insbesondere in einer gleichen radialen Position (r0), insbesondere den radialen Endabschnitten der mehreren Vorsprünge entsprechend, angeordnet sind.

2. Statorsegment nach Anspruch 1, wobei eine radiale Ausdehnung der Vorsprünge zwischen 1/50 und 1/3, insbesondere zwischen 1/20 und 1/5, einer Ausdehnung der Platte in Umfangsrichtung beträgt.

3. Statorsegment nach einem der vorhergehenden Ansprüche, wobei die erste Form rund, insbesondere kreisförmig, ist.

4. Statorsegment nach einem der vorhergehenden Ansprüche, wobei eine Ausdehnung (L) in der Umfangsrichtung jeder der Platten zwischen einem 1.000-Fachen und einem 10.000-Fachen einer Dicke der Platte senkrecht zu der Hauptfläche beträgt.

5. Statorsegment nach einem der vorhergehenden Ansprüche, wobei ein Abschnitt (217) der zweiten Form der zweiten Durchgangsöffnung (215) an einem Umfangsende der zweiten Platte zumindest einem Abschnitt der ersten Form entspricht.

6. Statorsegment nach einem der vorhergehenden Ansprüche, wobei die zweite Platte noch eine weitere zweite Durchgangsöffnung (219) der ersten Form aufweist, die an einem anderen Umfangsende der zweiten Platte angeordnet ist.

7. Statorsegment nach einem der vorhergehenden Ansprüche, derart eingerichtet, dass das Kühlfluid
entlang einer axialen Richtung (105) innerhalb der ersten Durchgangsöffnung und der weiteren ersten Durchgangsöffnung, und/oder
entlang der Umfangsrichtung (101) innerhalb eines Umfangsabschnitts der ersten Durchgangsöffnung, und
entlang der radialen Richtung (103) und der axialen Richtung innerhalb der sich radial erstreckenden Abschnitte der zweiten Durchgangsöffnung, und
entlang der axialen Richtung innerhalb der dritten Durchgangsöffnung fließt.

## Revendications

1. Segment ( 1000 ) de stator pour une machine électrique, le segment de stator comprenant :
une pile ( 1000 ) d'au moins trois d'une pluralité de plaques ayant des surfaces planes, les surfaces s'étendant dans une direction ( 101 ) circonférentielle, dans une mesure plus grande que dans une direction ( 103 ) radiale, la pluralité des plaques comprenant au moins
une première plaque ( 100 ) ayant une première ouverture ( 107, 109 ) traversante d'une première forme et
une deuxième plaque ( 200 ) ayant une deuxième ouverture ( 215 ) traversante d'une deuxième forme différente de la première forme,
dans lequel les au moins trois plaques sont reliées à leurs surfaces principales pour former la pile, de manière à former un conduit de refroidissement à l'intérieur de la pile par un chevauchement au moins partiel de la première ouverture traversante et de la deuxième ouverture traversante, dans lequel du fluide de refroidissement peut être conduit dans le conduit de refroidissement, au moins dans la direction circonférentielle,
dans lequel chaque plaque comprend plusieurs protubérances ( 111 ) faisant saillie radialement pour donner, lorsque la pile est formée, plusieurs dents et fentes ( 113 ) alternant dans la direction circonférentielle,
dans lequel la première plaque a la première ouverture ( 107 ) traversante, prévue pour former un orifice ( 1007 ) d'entrée du liquide de refroidissement, disposée à une première extrémité circonférentielle de la première plaque,
dans lequel la première plaque a une autre première ouverture ( 109 ) traversante, prévue pour former un orifice ( 1009 ) de sortie du liquide de refroidissement de la première forme, disposée à une autre extrémité circonférentielle de la première plaque,
dans lequel la deuxième ouverture ( 215 ) traversante s'étend ( 1 ) dans la direction circonférentielle, entre 50 % et 99 % d'une étendue ( L ) circonférentielle de la deuxième plaque,
dans lequel l'étendue de la deuxième ouverture ( 215 ) traversante dans la direction circonférentielle est une partie principale de l'étendue ( L ) circonférentielle de la deuxième plaque,
dans lequel la deuxième ouverture ( 215 ) traversante comprend plusieurs parties ( 221 ) d'ouverture, s'étendant radialement en plusieurs positions circonférentielles respectives correspondant aux plusieurs protubérances ( 211 ),
dans lequel une étendue des parties d'ouverture, s'étendant radialement dans la direction radiale, représente entre 10 fois et 100 fois une étendue des parties s'étendant radialement dans la direction circonférentielle,
dans lequel les plusieurs parties d'ouverture s'étendant radialement peuvent permettre de refroidir les dents du segment de stator,
dans lequel la pluralité de plaques comprend une troisième plaque ( 300 ), ayant une pluralité de troisièmes ouvertures ( 323 ) traversantes d'une troisième forme différente de la deuxième forme,
les troisièmes ouvertures traversantes étant disposées en plusieurs positions circonférentielles correspondant aux positions des plusieurs protubérances ( 311 ),
les troisièmes ouvertures traversantes étant en particulier disposées en la même position ( r0 ) radiale, en particulier correspondant à des parties d'extrémité radiales des plusieurs protubérances.

2. Segment de stator suivant la revendication 1, dans lequel une étendue radiale des protubérances représente entre 1/50^{ème} et 1/3, en particulier entre 1/20^{ème} et 1/5^{ème}, d'une étendue de la plaque dans la direction circonférentielle.

3. Segment de stator suivant l'une des revendications précédentes, dans lequel la première forme est ronde, en particulier circulaire.

4. Segment de stator suivant l'une des revendications précédentes, dans lequel une étendue ( L ), dans la direction circonférentielle de chacune des plaques, représente entre 1.000 fois et 10.000 fois une épaisseur de la plaque perpendiculaire à la surface principale.

5. Segment de stator suivant l'une des revendications précédentes, dans lequel une partie ( 217 ) de la deuxième forme de la deuxième ouverture ( 215 ) traversante, à une extrémité circonférentielle de la deuxième plaque, correspond à au moins une partie de la première forme.

6. Segment de stator suivant l'une des revendications précédentes, dans lequel la deuxième plaque a une autre deuxième ouverture ( 219 ) traversante de la première forme, disposée à une autre extrémité circonférentielle de la deuxième plaque.

7. Segment de stator suivant l'une des revendications précédentes, adapté de manière à ce que le fluide de refroidissement
suivant une direction ( 105 ) axiale, dans la première ouverture traversante et dans l'autre première ouverture traversante et/ou
suivant la direction ( 101 ) circonférentielle, dans une partie circonférentielle de la première ouverture traversante et
suivant la direction ( 103 ) radiale et la direction axiale dans les parties s'étendant radialement de la deuxième ouverture traversante et
suivant la direction axiale dans la troisième ouverture traversante.
